# EUROPEAN PATENT APPLICATION

(11) **EP 2 495 152 A1**
(43) Date of publication of application: **05.09.2012**
(21) Application number: 12157812.4
(22) Date of filing: 01.03.2012
(51) Int. Cl.: B62B 7/08, B62B 7/06

(54) **Foldable stroller**

(30) Priority: 03.03.2011 JP 2011046296
(71) Applicant: Aprica Children's Products Inc., Chuo-ku, Osaka-shi Osaka 542-0082 (JP)
(72) Inventor: Ohnishi, Ichiro, Osaka-shi, Osaka 542-0082 (JP)
(74) Representative: Prüfer & Partner GbR European Patent Attorneys

(57) **Abstract**

A foldable stroller includes: front legs (11); rear legs (13) each having its upper end pivotally coupled to an upper end of the front leg (11); slide members (31) each slidably coupled to an intermediate region of the rear leg (13); longitudinal members (15) each having its front end region pivotally coupled to an intermediate region of the front leg (11), and each having its rear end pivotally coupled to the slide member (31); lock members (34) each provided in the slide member (31) and each capable of engaging with an engaged portion (35) formed in the rear leg (13); and a lock mechanism configured to bring the lock members (34) into an engaged state so that the slide members (31) are not allowed to slide and the stroller is held in a unfolded state in which the rear legs (13) are opened at a predetermined angle with respect to the front legs (11), and configured to bring the lock members (34) into a disengaged state so that the slide members (31) are allowed to slide and the rear legs (13) are enabled to pivot with respect to the front legs (11).

## Description

### Technical Field

The present invention relates to lock mechanisms configured to hold a foldable stroller in a unfolded state.

### Background Art

Foldable strollers are folded when not in use, and are unfolded when in use. The foldable strollers typically include a lock mechanism in order to prevent a stroller in a unfolded state from being accidentally folded while in use. For example, when folding a stroller described in Japanese Unexamined Patent Application Publication No. 2009-120182, push bars slide along front legs, whereby the dimension of the stroller in the height direction is reduced. Moreover, the crossing angle of bar members changes both in a bottom cross member and a back cross member each having an "X" shape, whereby the dimensions of the stroller in the longitudinal direction and the lateral direction are reduced.

A lock mechanism of the stroller of Japanese Unexamined Patent Application Publication No. 2009-120182 has a first link bar, an operation member, and a second link bar, which are pivotally coupled to each other. The first link bar, the operation member, and the second link bar are arranged in series in this order so as to extend between the bar members of the back cross member. The operation member placed in a central portion in the lateral direction of the stroller is located at a position slightly beyond the change point, and the crossing angle of the bar members of the back cross member is fixed. At this time, since the first link bar, the operation member, and the second link bar are aligned substantially linearly in the lateral direction of the stroller, the lock mechanism extends in the width direction of the stroller. When folding the stroller, the operation member is pulled up with a hand. At this time, the first link bar is tilted so as to extend obliquely downward from the operation member, and the second link bar is tilted so as to extend obliquely downward from the operation member. Thus, the lock mechanism is bent and deformed into an inverted "V" shape, and is reduced in size in the lateral direction.

In the stroller of Japanese Unexamined Patent Application Publication No. 2009-120182, each of coupling members fixed to the upper ends of the front legs has an operation button having a lock pin. Each push bar has a lock hole configured to receive the lock pin at least in the unfolded state of the stroller. A push-bar lock mechanism that fixes the position of the push bars with respect to the front legs in the unfolded state of the stroller is configured in this manner. Operating the operation button to disengage the lock pin from the lock hole allows the push bar to slide along the front leg.

### Citation List

### Patent Literature

Patent Literature 1: Japanese Unexamined Patent Application Publication No. 2009-120182

### Summary of Invention

In the stroller of Japanese Unexamined Patent Application Publication No. 2009-120182, the lock mechanism is provided on the back cross member and the rod bar. The inventor found a lock mechanism having a completely new configuration.

It is an object of the present invention to provide a foldable stroller including a lock mechanism capable of performing a lock operation to hold a stroller in a unfolded state when the stroller is in use, and capable of easily performing an unlock operation when folding the stroller.

In order to achieve the above object, a foldable stroller according to the present invention includes: a pair of front legs each having a front wheel at its lower end; a pair of rear legs each having its upper end pivotally coupled to an upper end of the front leg, and each having a rear wheel at its lower end; a pair of slide members each slidably coupled to an intermediate region of the rear leg; a pair of longitudinal members each having its front end region pivotally coupled to an intermediate region of the front leg, and each having its rear end pivotally coupled to the slide member; a pair of lock members each provided in the slide member and each capable of engaging with an engaged portion formed in the rear leg; and a lock mechanism configured to bring the pair of lock members into an engaged state so that the slide members are not allowed to slide and the stroller is held in a unfolded state in which the rear legs are opened at a predetermined angle with respect to the front legs, and configured to bring the pair of lock members into a disengaged state so that the slide members are allowed to slide and the rear legs are enabled to pivot with respect to the front legs.

According to the present invention, each slide member slidably coupled to the rear leg is fixed to the rear leg via the lock member in the engaged state. Each slide member can slide along the rear leg while the lock member is in the disengaged state. Thus, the lock mechanism that holds the stroller in the unfolded state can be implemented with a simple configuration.

The present invention is not limited to one embodiment. For example, the stroller is held in the unfolded state by such a lock mechanism, and may be held in a folded state by a hook or a pin. In this case, for example, the hook or the pin provided on the front leg holds the rear leg, which has pivoted to a position close to the front leg, at the position close to the front leg. In a preferred embodiment, each of the engaged portions of the rear legs is formed both at a position corresponding to the unfolded state of the stroller and at a position corresponding to the foided state of the stroller in which the rear legs are closed so as to be located close to the front legs. According to this embodiment, the stroller can be held not only in the unfolded state but also in the folded state, whereby operational performance is improved.

The structure of the lock mechanism is not particularly limited. For example, the lock mechanism may be comprised of a wire coupling the pair of lock members together, a pulley operated by the user of the stroller to pull the wire, and an elastic member that returns the lock members to the disengaged state. Alternatively, for example, the lock mechanism may have a bar member that is coupled to the lock members. In an embodiment in which the lock mechanism is comprised of a link member coupled to the lock members and an operation member that is operated by the user of the stroller to operate the link member, both ends of one link member may be coupled to engagement members, respectively, or a pair of link members may be coupled to the lock members, respectively. In a preferred embodiment, the lock mechanism may include an operation member, a first link member having its one end coupled to one of the lock members and the other end coupled to the operation member, and a second link member having its one end coupled to the other lock member and the other end coupled to the operation member. According to this embodiment, the two lock members can be moved simultaneously.

Preferably, the first and second link members are bar-shaped elements, and advance and withdraw in a lateral direction of the stroller, the operation member is shifted in a direction perpendicular to the lateral direction of the stroller, a guide track tilted with respect to the lateral direction and the direction perpendicular to the lateral direction is formed in one of the operation member and the link members, and a protrusion that is guided by the guide track is formed in the other of the operation member and the link members. According to this embodiment, the pair of engagement members can be operated in a laterally symmetrical manner. By coaxially placing the first link member and the second link member so that the other end of the first link member faces the other end of the second link member, and interposing a return spring between the link members, the link members can be biased to their original position to return the lock members to the engaged position.

This embodiment is preferably implemented by, e.g., the foldable stroller that further includes a pipe member extending in the lateral direction of the stroller between the pair of slide members, and that slidably accommodates the first and second link members in one end region and the other end region of the pipe member, respectively.

Strollers typically include push bars. In a preferred embodiment, the foldable stroller further includes: push bars each slidably attached to the front leg; and leg coupling members each positioned below the longitudinal member, and each having its front end pivotally coupled to the push bar, and its rear end pivotally coupled to the rear leg. According to this embodiment, in a folding operation, the push bars can slide cooperatively, and the height dimension of the stroller can be reduced.

As described above, the present invention can implement the lock mechanism with a simple configuration. Thus, operational performance of the folding operation is improved.

### Brief Description of Drawings

Fig. 1 is a side view showing a foldable stroller of an embodiment of the present invention in a unfolded state.
Fig. 2 is a side view showing the foldable stroller of the embodiment in a folded state.
Fig. 3 is a back view schematically showing the foldable stroller in the unfolded state.
Fig. 4 is an enlarged cross-sectional view of a lock mechanism in an engaged state.
Fig. 5 is an enlarged cross-sectional view of the lock mechanism in a disengaged state.

### Description of Embodiments

An embodiment of the present invention will be described in detail below with reference to the accompanying drawings.

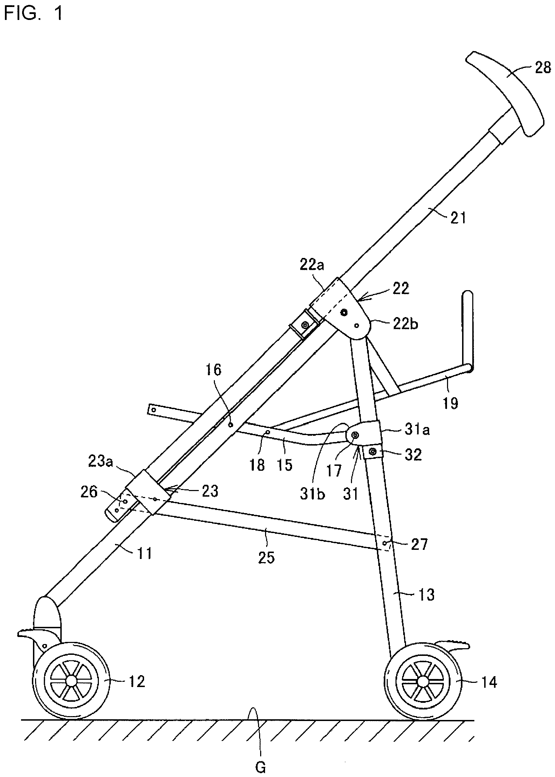

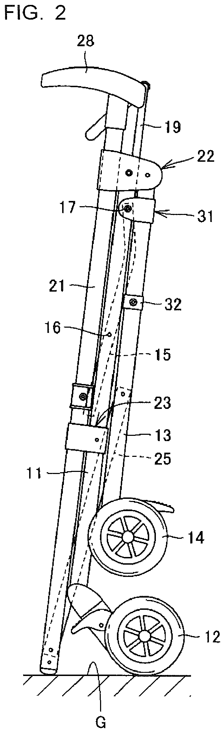

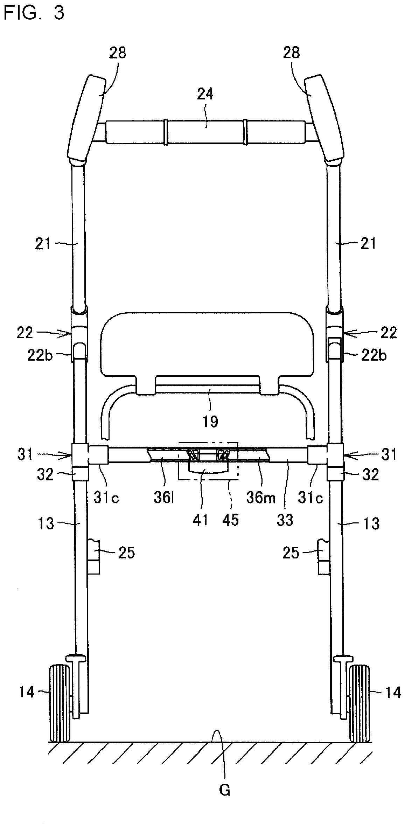

Fig. 1 is a side view of a stroller according to an embodiment of the present invention. Fig. 1 shows a unfolded state during use. Fig. 2 is a side view showing a folded state of the stroller of the embodiment. The stroller is folded into a compact form when not in use. Fig. 3 is a back view schematically showing the stroller in the unfolded state. In order to facilitate understanding of the present invention, Figs. 1 to 3 mainly show a body frame, and members forming a seat, a canopy, etc. are omitted.

The stroller is a foldable stroller that is reduced in size in the height direction when folded. The stroller includes, as main components of the body frame, a pair of front legs 11, a pair of rear legs 13, a pair of longitudinal members 15, a pair of push bars 21, a handle member 24, a pair of leg coupling members 25, and a back member 33. As used herein, the "pair of elements" represents a pair of left and right elements located at both ends in the lateral direction of the stroller.

The front legs 11 extend substantially in the vertical direction. Each front leg 11 has a front wheel 12 at its lower end, and has a coupling member 22 at its upper end. The coupling member 22 is fixed to the front leg 11. The coupling member 22 has a cylindrical body 22a in its front part, and has a protruding portion 22b in its rear part. A guide sleeve 23 is fixed and attached to an intermediate region of each front leg 11. The guide sleeve 23 has a cylindrical portion 23a in its front part.

The rear legs 13 extend substantially in the vertical direction. Each rear leg 13 has a rear wheel 14 at its lower end. The upper end of the rear leg 13 is pivotally coupled to the protruding portion 22b of the coupling member 22 fixed to the front leg 11. In the unfolded state shown in Fig. 1, the rear legs 13 are held at a predetermined angle with respect to the front legs 11, and the rear legs 13 are opened with respect to each other so as to be located away from the front legs 11.

In a folding operation of the stroller, the rear legs 13 pivot in a direction toward the front legs 11, and in the folded state shown in Fig. 2, the rear legs 13 are positioned parallel to the front legs 11, and the rear wheels 14 are located above the front wheels 12.

A slide member 31 is slidably coupled to an intermediate region of each rear leg 13. Each slide member 31 has a cylindrical body 31a, a protruding portion 31b protruding forward from the cylindrical body 31a, and an outer cylinder 31c protruding inward in the lateral direction from the cylindrical body 31a. The rear legs 13 extend through the cylindrical bodies 31a, respectively.

A fixing bracket 32 is attached and fixed to the intermediate region of each rear leg 13. Each fixing bracket 32 restricts sliding movement of the slide member 31 so that the slide member 31 does not slide downward beyond the fixing bracket 32. This allows the slide member 31 to slide between the coupling member 22 and the fixing bracket 32 along the rear leg 13. In the unfolded state of the stroller, the slide members 31 are located on the fixing brackets 32 and adjoin the fixing brackets 32, respectively.

The longitudinal members 15 extend substantially in the longitudinal direction, and an infant seat, not shown, is supported between the pair of longitudinal members 15. A front end region of each longitudinal member 15 is pivotally coupled to the intermediate region of the front leg 11 via a pivot shaft 16. The rear end of each longitudinal member 15 is pivotally coupled to the protruding portion 31b of the slide member 31 via a pivot shaft 17. A central portion of each longitudinal member 15 is pivotally coupled to a backrest support member 19 via a pivot shaft 18. As shown in Fig. 3, the backrest support member 19 has an inverted "U" shape, and has its both ends coupled to the pair of longitudinal members 15, respectively. The backrest support member 19 supports a backrest portion of the infant seat, not shown, in a reclinable manner.

In the folding operation of the stroller, the slide members 31 slide upward along the rear legs 13, respectively, and the rear legs 13 pivot toward the front legs 11. In the folded state shown in Fig. 2, the slide members 31 are located close to the coupling members 22, respectively, and the rear legs 13 are closed so as to be located close to the front legs 11.

The push bars 21 extend in the vertical direction with their lower regions being positioned so as to overlap the front legs 11, respectively. Each push bar 21 is slidably held by the cylindrical bodies 22a, 23a of the coupling member 22 and the guide sleeve 23 that are fixed to the front leg 11. In the folding operation of the stroller, the push bars 21 slide downward along the front legs 11, respectively, and in the folded state shown in Fig. 2, the lower ends of the push bars 21 contact the ground G. The lower ends of the push bars 21 and the front wheels 21, which contact the ground G, allow the stroller in the folded state to stand by itself.

The upper ends of the pair of push bars 21 are coupled together by the handle member 24 extending in the lateral direction of the stroller. As shown in Fig. 3, the handle member 24 has a thick intermediate region so that the operator of the stroller can easily hold it. This allows the operator to push the stroller straight in the forward direction with one hand. A pair of grip portions 28 are provided at the upper ends of the push bar 21, respectively, so that the operator can easily hold them. This allows the operator to push the stroller with both hands, and allows the operator to push the stroller in a desired direction by adjusting the forces of the right and left hands pushing the grip portions 28.

The leg coupling members 25 are positioned below the longitudinal members 15, and each leg coupling member 25 extends substantially in the longitudinal direction between the front leg 11 and the rear leg 13. Specifically, the front end of each leg coupling member 25 is pivotally coupled to the lower end of the push bar 21 via a pivot shaft 26, and the rear end of each leg coupling member 25 is pivotally coupled to the rear leg 13 via a pivot shaft 27.

Each guide sleeve 23, which is fixed to the front leg 11 at a position below the pivot shaft 16, slidably supports a lower end region of the push bar 21. Each pivot shaft 26 is provided at the lower end of the push bar 21 protruding downward from the guide sleeve 23. In the folding operation of the stroller, the leg coupling members 25 pivot downward about the pivot shafts 27 provided at the rear ends of the leg coupling members 25. Thus, the front ends of the leg coupling members 25 are shifted downward, whereby the push bars 21 slide downward.

The back member 33 is a pipe member, and extends in the lateral direction of the stroller between the pair of slide members 31, 31. Specifically, the left end of the back member 33 is fixed to the left slide member 31, and the right end of the back member 33 is fixed to the right slide member 31. This fixing is implemented as follows. The ends of the back member 33 are fitted in the outer cylinders 31c so that the inner peripheral surface of each outer cylinder 31c extends on the outer peripheral surface of the end of the back member 33. Moreover, a retaining pin 37 is provided in each end of the back member 33 so as to transversely extend through the inner peripheral surface of the outer cylinder 31c and the outer peripheral surface of the back member 33. The ends of the back member 33 are fixed to the slide members 31 in this manner. A lock mechanism configured to hold the stroller in the unfolded state is provided inside the back member 33.

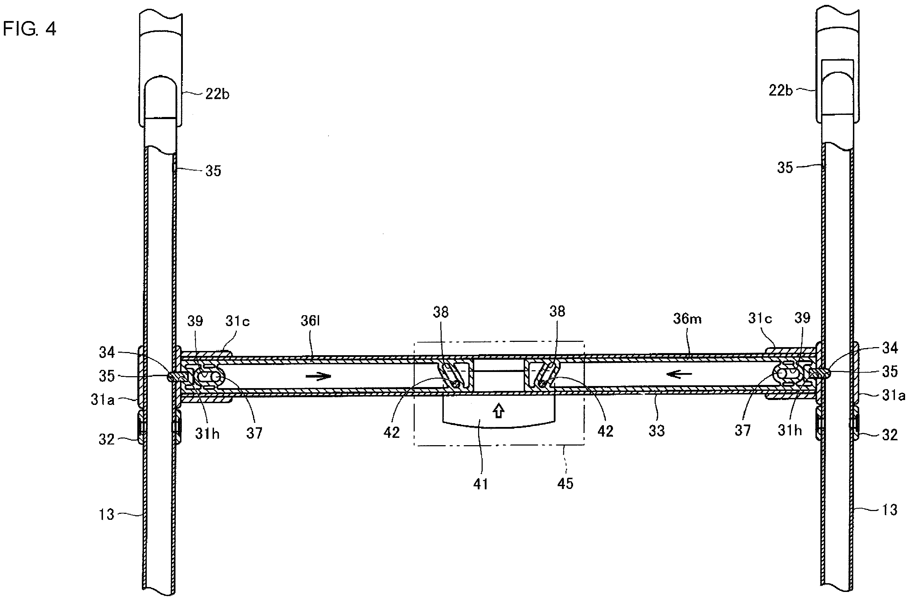

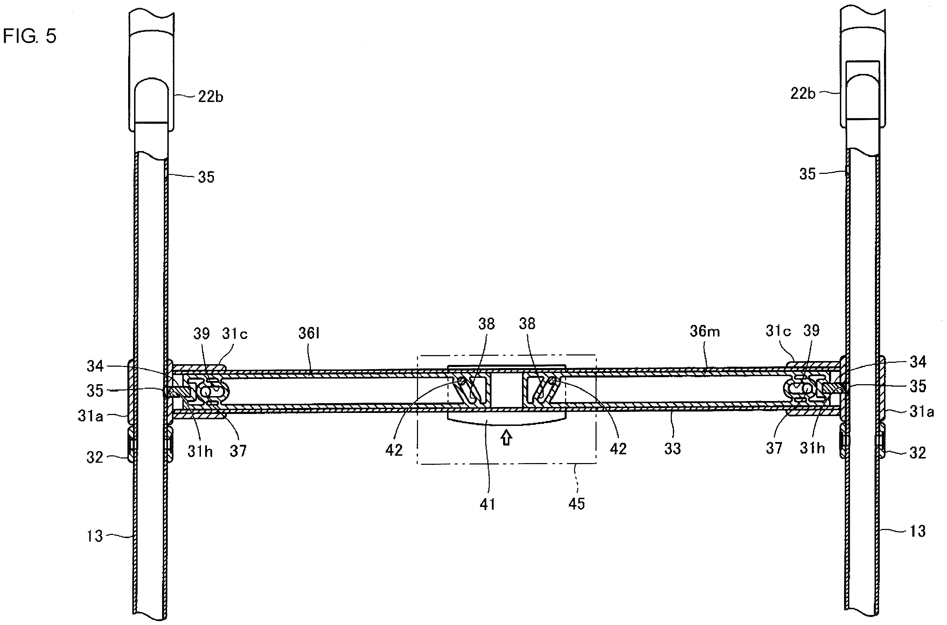

Figs. 4 and 5 are enlarged cross-sectional views of the lock mechanism of the stroller. Fig. 4 shows the lock mechanism in an engaged state, and Fig. 5 shows the lock mechanism in a disengaged state. The lock mechanism has a pair of lock pins 34, a pair of lock pin holes 35, a pair of link members (a first link member 361 and a second link member 36m), and an operation member 41.

The lock pin 34 is a lock member provided in each slide member 31 so that the slide member 31 is not allowed to slide. Each slide member 31 has a through hole 31h through which the lock pin 34 extends, and each rear leg 13 has the lock pin hole 35 as an engaged portion that receives the lock pin 34. The through hole 31h and the lock pin hole 35 are provided in the slide member 31 and the rear leg 13, respectively, so as to extend in a direction perpendicular to the longitudinal direction of the rear leg 13, namely the lateral direction of the stroller. Each lock pin 34 advances and withdraws in the lateral direction of the stroller by the link member described below.

The first link member 361 and the second link member 36m as the link members are bar-shaped elements extending in the lateral direction of the stroller. The first link member 361 and the second link member 36m are accommodated in the back member 33, and are capable of advancing and withdrawing in the lateral direction. The first link member 361 has a long hole 39, and the pin 37 protruding from the back member 33 extends through the long hole 39. The long hole 39 extends in the longitudinal direction of the first link member 361. The distance by which the first link member 361 advances and withdraws is defined by the length dimension of the long hole 39.

The lock pin 34 is attached to the outer end in the lateral direction of the first link member 361. This attachment of the lock pin 34 may be implemented by mechanical coupling. In the present embodiment, the lock pin 34 is fixed to the outer end of the first link member 361 so as to further extend outward in the lateral direction from the outer end of the first link member 361. A long hole 38 extending obliquely with respect to the lateral direction is formed in the inner end in the lateral direction of the first link member 361. The second link member 36m is the same member as the first link member 361, and is placed symmetrically with the first link member 361 in the lateral direction.

The operation member 41 is an operation element provided in a central portion of the back member 33 and configured to be pressed in a direction perpendicular to the lateral direction of the stroller. The length dimension of the operation member 41 as measured in the lateral direction of the stroller (the longitudinal direction of the back member 33) is approximately equal to, e.g., the width of an adult's hand so that the operator of the stroller can easily hold the operation member 41. As shown in Fig. 4, the operation member 41 protrudes downward when located at its original position.

The operation member 41 has two protrusions 42. The protrusions 42 engage with the long holes 38 of the link members, respectively. The long holes 38 extend obliquely with respect to the direction perpendicular to the lateral direction of the stroller, namely with respect to the vertical direction. Each long hole 38 extending obliquely at 45 degrees with respect to the lateral direction of the stroller functions as a guide track that guides the protrusion 42. Each long hole 38 extends from a lower, inner position in the lateral direction of the stroller to an upper, outer position in the lateral direction of the stroller.

Operation of the lock mechanism will be described below.

When the operation member 41 is located at its original position shown in Fig. 4, each protrusion 42 is located at the lower, inner position in the lateral direction of the stroller in the long hole 38. Each lock pin 34 is in an engaged state. Namely, each lock pin 34 extends through the through hole 31h in the cylinder body 31a of the slide member 31 and extends in the lock pin hole 35. In the engaged state in which the pair of lock pins 34 extend in the pair of lock pin holes 35, the pair of slide members 31 are not allowed to slide on the pair of rear legs 13. The lock pin holes 35 are formed at positions corresponding to the unfolded state (Fig. 1) of the stroller, and hold the stroller in the unfolded state.

The long holes 38 extending obliquely with respect to the lateral direction of the stroller and the protrusions 42 engaging with the long holes 38 convert movement of the operation member 41 that is shifted in the direction perpendicular to the lateral direction of the stroller to movement of the link members 361, 36m that are shifted in the lateral direction of the stroller.

When the operator holds the back member 33 and presses the operation member 41 in the direction shown by a thick arrow in Fig. 4, the protrusions 42 move upward along the long holes 38. At this time, since the positions of the protrusions 42 in the lateral direction of the stroller do not change, the two link members 361, 36m withdraw in the directions shown by thin arrows in Fig. 4. Accordingly, the lock pins 34 are removed from the lock pin holes 35 and thus are brought into a disengaged state. In the disengaged state in which the pair of lock pins 34 are removed from the pair of lock pin holes 35, the pair of slide members 31 are allowed to slide along the pair of rear legs 13. If the operator pulls the back member 33 upward while holding the back member 33 and pressing the operation member 41, the back member 33 and the slide members 31 are shifted upward, and the rear legs 13 pivot toward the front legs 11. The stroller is thus deformed from the unfolded state shown in Fig. 1 to the folded state shown in Fig. 2.

When the operator releases the back member 33, the operation member 41 is returned to the original position by a return spring. As shown in Fig. 5, each lock pin hole 35 is formed not only at a lower position corresponding to the unfolded state (Fig. 1) of the stroller but also at an upper position corresponding to the folded state (Fig. 2) of the stroller. Each lock pin 34 is again brought into the engaged state by entering the upper lock pin hole 35, whereby the stroller is held in the folded state. The return spring may be provided in a compressed state between the link members 361, 36m to bias the link members 361, 36m outward in the lateral direction of the stroller. Alternatively, the return spring may be provided in a compressed state between the back member 33 and the operation member 41 to bias the operation member 41 downward.

If the operator desires to change the stroller from the folded state to the unfolded state, the operator can perform the above operation in reverse order.

In the present embodiment, the back member 33 may be provided with a safety cover 45 as a safety device that prevents accidental operation of the lock mechanism. The safety cover 45 covers the operation member 41 to prevent the operation member 41 from being unintentionally pressed upward. In order to bring the lock mechanism into the disengaged state, the operator can operate the operation member 41 by, e.g., opening the safety cover 45.

Although the embodiment of the present invention is described above with reference to the drawings, the present invention is not limited to the illustrated embodiment. Various modifications and variations can be made to the illustrated embodiment without departing from the sprit and scope of the present invention.

The foldable stroller according to the present invention is advantageously used in the field of nursery equipment.

## Claims

1. A foldable stroller, comprising:
a pair of front legs 11 each having a front wheel 12at its lower end;
a pair of rear legs 13 each having its upper end pivotally coupled to an upper end of said front leg 11, and each having a rear wheel 14 at its lower end;
a pair of slide members 31 each slidably coupled to an intermediate region of said rear leg 13;
a pair of longitudinal members 15 each having its front end region pivotally coupled to an intermediate region of said front leg 11, and each having its rear end pivotally coupled to said slide member 31;
a pair of lock members 34 each provided in said slide member 31 and each capable of engaging with an engaged portion 35 formed in said rear leg 13; and
a lock mechanism configured to bring said pair of lock members 34 into an engaged state so that said slide members 31 are not allowed to slide and said stroller is held in a unfolded state in which said rear legs 13 are opened at a predetermined angle with respect to said front legs 11, and configured to bring said pair of lock members 34 into a disengaged state so that said slide members 31 are allowed to slide and said rear legs 13 are enabled to pivot with respect to said front legs 11.

2. The foldable stroller according to claim 1, wherein
each of said engaged portions 35 of said rear legs 13 is formed both at a position 35 corresponding to said unfolded state of said stroller and at a position 35 corresponding to a folded state of said stroller in which said rear legs 13 are closed so as to be located close to said front legs 11.

3. The foldable stroller according to claim 1 or 2, wherein
said lock mechanism includes an operation member 41, a first link member 361 having its one end coupled to one of said lock members 34 and the other end coupled to said operation member 41, and a second link member 36m having its one end coupled to the other lock member 34 and the other end coupled to said operation member 41.

4. The foldable stroller according to claim 3, wherein
said first and second link members 361, 36m are bar-shaped elements, and advance and withdraw in a lateral direction of said stroller,
said operation member 41 is shifted in a direction perpendicular to said lateral direction of said stroller,
a guide track 38 tilted with respect to said lateral direction and said direction perpendicular to said lateral direction is formed in one of said operation member 41 and said link members 361, 36m, and
a protrusion 42 that is guided by said guide track 38 is formed in the other of said operation member 41 and said link members 361, 36m.

5. The foldable stroller according to claim 4, further comprising:
a pipe member 33 extending in said lateral direction of said stroller between said pair of slide members 31, wherein
said first and second link members 361, 36m are slidably accommodated in one end region and the other end region of said pipe member 33, respectively.

6. The foldable stroller according to any one of claims 1 to 5, further comprising:
push bars 21 each slidably attached to said front leg 11; and
leg coupling members 25 each positioned below said longitudinal member 15, and each having its front end pivotally coupled to said push bar 21, and its rear end pivotally coupled to said rear leg 13.
